Europäisches Patentamt

European Patent Office

Office européen des brevets

(11) Veröffentlichungsnummer: **0 243 715**
**B1**

(12) # EUROPÄISCHE PATENTSCHRIFT

(45) Veröffentlichungstag der Patentschrift:
20.06.90

(51) Int. Cl.⁵: **F16F 13/00, B60K 5/12**

(21) Anmeldenummer: 87104896.3

(22) Anmeldetag: 02.04.87

(54) Zweikammerstützlager mit hydraulischer Dämpfung, insbesondere Motorlager in Kraftfahrzeugen.

(30) Priorität: 26.04.86 DE 3614161

(43) Veröffentlichungstag der Anmeldung:
04.11.87 Patentblatt 87/45

(45) Bekanntmachung des Hinweises auf die Patenterteilung:
20.06.90 Patentblatt 90/25

(84) Benannte Vertragsstaaten:
ES FR GB IT SE

(56) Entgegenhaltungen:
DE-A- 3 410 781

PATENT ABSTRACTS OF JAPAN, Band 9,
Nr. 322 (M-440)[2045], 18. Dezember 1985; &
JP-A-60 157 540 (TOYOTA JIDOSHA K.K.) 17-08-1985
PATENT ABSTRACTS OF JAPAN, Band 8,
Nr. 216 (M-329)[1653], 3. Oktober 1984; &
JP-A-59 99 133 (TOYODA GOSEI K.K.) 07-06-1984
PATENT ABSTRACTS OF JAPAN, Band 10,
Nr. 218 (M-503)[2274], 30. Juli 1986; &
JP-A-61 55 426 (BRIDGESTONE
CORP.) 19-03-1986 (Kat. A)

(73) Patentinhaber: Lemförder Metallwaren AG,
Postfach 1220, D-2844 Lemförde(DE)

(72) Erfinder: Jördens, Ernst-Günter, Geranienweg 29,
D-2845 Damme(DE)
Erfinder: Sprute, Johannes, Hegerstrasse 24,
D-4500 Osnabrück(DE)

(74) Vertreter: Bruse, Willy Hans Heinrich, Edisonstrasse 14,
D-2800 Bremen 33(DE)

## Beschreibung

Die Erfindung betrifft ein Zweikammerstützlager mit hydraulischer Dämpfung, insbesondere ein Motorlager in Kraftfahrzeugen, mit Gattungsmerkmalen nach dem Patentanspruch 1.

Motorlager mit diesen Merkmalen sind aus der DE-OS 3 410 781 bekannt. Bei dieser bekannten Anordnung ist der Düsenkanal durch korrespondierende, gegeneinander offene Ausnehmungen in zwei gegeneinander um die Hauptachse des Lagers verdrehbaren Scheiben gebildet, die beim Einbau des Lagers in eine auf individuelle Dämpfung ausgerichtete Stellung zueinander gebracht werden können. Der Boden der gegeneinander offenen Ausnehmungen ist als schiefe Ebene ausgebildet, so daß durch Verdrehung der Scheiben sowohl die Länge als auch der Querschnitt des Düsenkanals verändert werden können. Das Bauelement zur Verstellung besteht aus einem mit der unteren Scheibe fest verbundenen Bolzen, der eine Bohrung des Gehäuses durchgreift und am freien Ende außerhalb des Gehäuses eine Handhabe zur Verdrehung aufweist, wobei eine auf dem Bolzengewinde außerhalb des Gehäuses veschraubbare Mutter zur Verspannung des Bolzens mit dem Gehäuse nach der Einstellung dient. Individuelle Toleranzen und Ungenauigkeiten können somit durch Änderung der Länge und des Querschnitts des Düsenkanals auf einen akzeptablen Ausgangswert eingestellt bzw. später nachgestellt werden.

Eine vergleichbare Ausbildung ist aus der DE-PS 3 019 337 bekannt, bei der eine Scheibe parallel zur Richtung der eingeleiteten Schwingungen zwischen zwei Anschlagplatten begrenzt beweglich ist, die den Zwischenboden beider Kammern und den Düsenkanal mit spiegelbildlich komplementären Ausnehmungen bilden und zur Veränderung der Länge sowie des Querschnitts des Düsenkanals gegeneinander verdrehbar sind. Die Druckschrift beschreibt nicht, wie diese Verstellung erfolgt.

Die DE-OS 3 436 534 beschreibt ein hydraulisch dämpfendes Motorlager gleicher Gattung, bei dem die Trennwand zwischen den beiden Kammern eine Drosselscheibe aufweist, die am Rand mit einem Axialspiel eingespannt und bei der das Axialspiel der Scheibeneinspannung von außen regelbar ist.

Bekannt sind auch Düsenkanäle zwischen den beiden Kammern eines Motorlagers mit elektronisch permanent regelbarer Durchflußmenge zur Beeinflussung der Dämpfungscharakteristik des Motorlagers. Der erforderliche technische Aufwand übersteigt jedoch bei weitem die Kosten eines Lagers nach der DE-OS 3 410 781.

Der Erfindung liegt die Aufgabe zugrunde, bei Zweikammerstützlagern der genannten Gattung eine permanente Verstellmöglichkeit für die Dämpfungseigenschaften des Lagers auch nach dessen Einbau zu schaffen und dabei die Abdichtung zwischen den gegeneinander verstellbaren Bauteilen aufrechtzuerhalten.

Diese Aufgabe löst die Erfindung durch die Ausbildungsmerkmale nach dem Kennzeichen des Patentanspruches 1.

Diese Ausbildungsmerkmale des Lagers ermöglichen eine laufende Anpassung der Dämpfungscharakteristik an wechselnde Betriebszustände. Dazu können gegebenenfalls Sensoren im Fahrzeug den Betriebszustand mittels Stellgliedern auf das Regelorgan für die Dämpfungscharakteristik im Lager übertragen. Auch eine Anpassung von Hand an ein gewünschtes Verhalten ist dadurch jederzeit nachträglich möglich.

Weitere Ausgestaltungen der Erfindung sind in den Unteransprüchen beschrieben.

Bei einer bevorzugten Ausführungsform, bei der sich die Ausgleichskammer ringförmig um eine mittige Arbeitskammer herum erstreckt, so daß die Spindel und ihr Verdrehorgan in von außen frei zugänglichen Bauteilen des Gehäuses angeordnet werden können und bei der der Düsenkanal in einem ringförmigen Bauteil angeordnet ist, welches gleichzeitig als Tragelement der ringförmigen Gummimembran der Wandung der Arbeitskammer dient und mit einem flachen Bodenteil fest verbunden ist, greift eine der beiden den Düsenkanal bildenden Bauteile mit einem erhabenen Profil in ein komplementäres Matrizenprofil des anderen Bauteiles ein und ist in diesem Profil mittels der Spindel verstellbar. Durch einfaches Verdrehen der Spindel mittels des nach außen aus dem Gehäuse herausgeführten Betätigungsorgans kann eine Querschnittsveränderung des Düsenkanals permanent während des gesamten Fahrbetriebes des Kraftfahrzeuges durchgeführt werden. Diese Regelung der Dämpfungscharakteristik ist von Hand oder selbsttätig ausführbar.

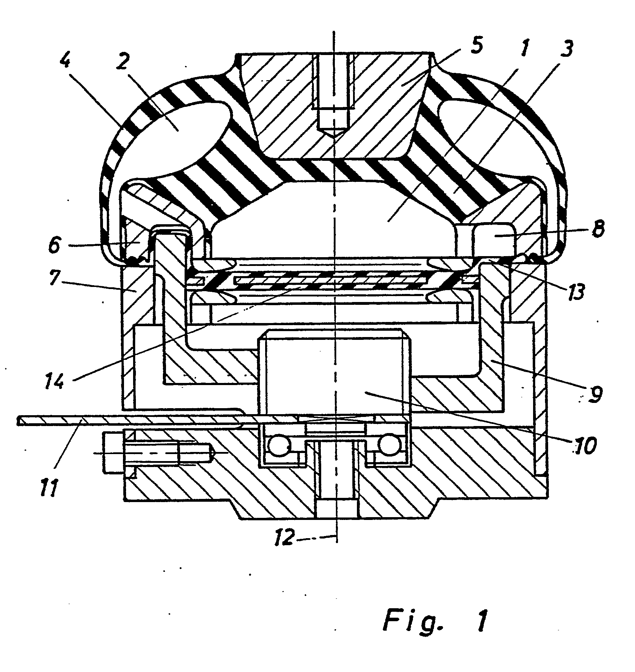

Auf der Zeichnung ist ein Ausführungsbeispiel der Erfindung im vertikalen Schnitt dargestellt.

Das Ausführungsbeispiel zeigt ein Zweikammerstützlager mit hydraulischer Dämpfung, insbesondere ein Motorlager in Kraftfahrzeugen, dessen mit Flüssigkeit gefüllte Arbeitskammer 1 und Ausgleichskammer 2 Wandungen 3 und 4 aus ringförmigen Gummimembranen aufweisen. Dabei erstreckt sich die Ausgleichskammer 2 ringförmig um eine mittige Arbeitskammer 1 herum, so daß die die Wandungen 3 und 4 bildenden Gummimembranen einstückig ausgebildet sind. Dieser Gummikörper ist mit dem oberen zentral angeordneten Tragelement 5 festhaftend verbunden, welches am Motor oder an einem anderen abzustützenden Teil befestigbar ist. Die die Wandung 3 der Arbeitskammer 1 bildende Gummimembran ist mit ihrem freien Ende festhaftend mit einem Bauteil 6 verbunden, welcher mit einem ringförmigen Bodenteil 7 der Arbeitskammer verschraubbar ist.

Der Düsenkanal 8 wird durch eine matrizenförmige Ausnehmung in dem ersteren Bauteil 6 und durch eine erhabene Profilierung eines zweiten Bauteiles 9 gebildet, der mit seiner erhabenen Profilierung in die matrizenförmige Ausnehmung des ersteren Bauteiles 6 eingreift. Dieses zweite Bauteil 9 ist im vertikalen Schnitt topfförmig ausgebildet, so daß der Rand mit der matrizenförmigen Ausbildung korrespondiert. Das zweite Bauteil 9 ist mit einem Innengewinde auf einer zentral angeordneten Spindel 10 verschraubbar, die frei drehbar in dem Gehäuse 7 gelagert und mittels eines seitlich aus dem Gehäuse herausgeführten Betätigungsorganes 11 verdrehbar ist. Durch Verdrehen der Spindel 10 um die Hauptachse 12 des Lagers wird eine Axialverschiebung des zweiten Bauteiles 9 bewirkt. Das Matrizenprofil in dem ersteren Bauteil 6 ist mittels einer elastischen Membran 13 abgedichtet, so daß der Rand des zweiten Bauteiles 9 mit seinem erhabenen Profil gegen diese Membran 13 arbeitet. Diese Membran 13 ist zwischen dem ersteren Bauteil 6 und dem Bodenteil des Gehäuses 7 eingespannt und kann einstückig mit einer zusätzlichen Beulfeder 14 ausgebildet sein, die ein weiteres Regelglied für die Veränderung der Dämpfungscharakteristik des Lagers darstellt. Das Betätigungsorgan 11 ist im Falle des Beispieles als ein seitlich aus dem Gehäuse 7 herausgeführter Hebel gestaltet, der in einem entsprechenden Schlitz des Gehäuses beweglich ist. Zur Erzielung mehrfacher Spindeldrehungen durch Bewegungen des Hebels 11 in einem begrenzten Schlitz ist eine Ratschenverbindung zwischen dem Hebel 11 und der Spindel 10 vorgesehen.

## Patentansprüche

1. Zweikammerstützlager mit hydraulischer Dämpfung, insbesondere Motorlager in Kraftfahrzeugen, dessen mit Flüssigkeit gefüllte Arbeitskammer (1) und Ausgleichskammer (2) Wandungen (3, 4) aus ringförmigen Gummimembranen mit einer in Anpassung an die Betriebsbelastung vorbestimmten Beulcharakteristik aufweisen und über einen Düsenkanal (8) miteinander verbunden sind, dessen Wände durch korrespondierende, einander überdeckende Profile in zwei starren, zueinander verstellbaren Bauteilen (6, 9) gebildet sind und dessen Durchflußwiderstand durch Veränderung des Düsenkanalquerschnitts einstellbar ist, wobei die beiden Bauteile mittels eines schraubbaren Stellgliedes (10), das koaxial zur Lagerhauptachse und in Axialrichtung festgelegt in dem Lagergehäuse gelagert und über ein aus dem Gehäuse herausragendes Bauelement (11) betätigbar ist, axial gegeneinander verstellbar sind, dadurch gekennzeichnet, daß das Stellglied durch eine Spindel (10) gebildet ist, die in dem Lagergehäuse frei drehbar gelagert ist, daß eines der beiden Bauteile (6, 9) zur Axialverstellung mit der Spindel (10) in Gewindeeingriff steht und daß die die Wände des Düsenkanals (8) bildenden Profile durch ein Dichtungselement gegeneinander abgedichtet sind.

2. Zweikammerstützlager nach Anspruch 1 mit einem konzentrisch zur Hauptachse des Lagers in einer Querebene angeordneten und aus einem Patrizen-/ Matrizenprofil der Bauteile gebildeten Düsenkanal, dadurch gekennzeichnet, daß das Dichtungselement aus einer elastischen Membran (13) besteht, die die offene Profilseite der Matrize überspannt und abdichtet, wobei die Patrize das Dichtungselement bei der Axialverstellung der beiden Bauteile (6, 9) in die Matrize hinein verformt.

3. Zweikammerstützlager nach den Ansprüchen 1 und 2, dadurch gekennzeichnet, daß das mittels der Spindel (10) verstellbare Bauteil (9) im vertikalen Schnitt topfförmig gestaltet ist und einen nach oben gerichteten Rand aufweist, der die Patrize bildet.

4. Zweikammerstützlager nach den Ansprüchen 1 bis 3, dadurch gekennzeichnet, daß die Spindel (10) mit einem seitlich aus dem Gehäuse herausragenden und in einem Schlitz des Gehäuses beweglichen Hebel (11) verbunden ist.

## Revendications

1. Support de montage à double chambre et à amortissement hydraulique, en particulier support de moteur de véhicules automobiles, dont la chambre de travail (1), emplie de liquide, et la chambre de compensation (2) présentent des parois (3, 4) faites de membranes de caoutchouc annulaires, dont la caractéristique de déformation est prédéterminée et adaptée aux sollicitations en service, et sont reliées entre elles par un canal de buse (8), dont les parois sont formées par des profils correspondants, se recouvrant l'un l'autre, en deux éléments constitutifs (6, 9) rigides, déplaçables l'un par rapport à l'autre et dont la résistance à l'écoulement est réglable par variation de la section transversale du canal de buse, les deux éléments constitutifs étant déplaçables axialement l'un vers l'autre, à l'aide d'un organe de positionnement (10) vissable, qui est monté dans le boîtier du support, coaxialement à l'axe principal du support et fixé axialement, et peut être actionné par un élément de construction (11) ressortant du boîtier, caractérisé en ce que l'organe de positionnement est formé par une broche (10) qui est montée librement tournante dans le boîtier du support, en ce que l'un des deux éléments constitutifs (6, 9) est en prise avec la broche (10), par un filetage, pour le déplacement axial, et en ce que les profilés formant les parois du canal de buse (8), sont rendus étanches l'un par rapport à l'autre, par un élément d'étanchéité.

2. Support de montage à double chambre selon la revendication 1, comportant un canal de buse disposé concentriquement à l'axe principal du support, dans un plan transversal, et formé par un profil en relief/en matrice des éléments constitutifs, caractérisé en ce que l'élément d'étanchéité est une membrane élastique (13) qui recouvre le côté profilé ouvert de la matrice et assure son étanchéité, le relief formant l'élément d'étanchéité dans la matrice, lors du déplacement axial des deux éléments constitutifs (6, 9).

3. Support de montage à double chambre selon les revendications 1 et 2, caractérisé en ce que l'élément constitutif (9), déplaçable à l'aide de la broche (10), a la forme d'un pot en coupe verticale et présente un bord dirigé vers le haut qui forme le relief.

4. Support de montage à double chambre selon les revendications 1 à 3, caractérisé en ce que la broche (10) est reliée à un levier (11) ressortant latéralement du boîtier et mobile dans une fente du boîtier.

## Claims

1. Double chamber support bearing with hydraulic damping, in particular a motor bearing in motor vehicles, whose fluid-filled working chamber (1) and equalising chamber (2) have walls (3, 4) consisting of annular rubber membranes with a buckling characteristic which is predetermined in accordance with the operating load, the working chamber (1) and equalising chamber (2) being connected together via a nozzle channel (8), whose walls are formed of corresponding, overlapping profiles in two rigid components (6, 9), which are adjustable relative to one another and whose flow resistance may be set by changing the nozzle channel cross-section, the two components being adjustable relative to one another in the axial direction by means of a threaded adjusting member (10), which is fixed coaxial to the main axis of the bearing and in the axial direction and which is actuatable via a structural element (11) projecting out of the housing, characterised in that the adjusting member is formed by a spindle (10), which is freely rotatably mounted in the bearing housing, in that one of the two components (6, 9) is engaged by a screw thread for axial adjustment with the spindle (10), and in that the walls of the profiles forming the nozzle channel (8) are sealed from one another by a sealing element.

2. Double support bearing according to claim 1, with a nozzle channel formed concentrically to the main axis of the bearing in a transverse plane, and formed of a male mould profile/female mould profile of the components, characterised in that the sealing element consists of an elastic membrane (13), which spans and seals the open profile side of the female mould, the male mould deforming the sealing element into the female mould when the two components (6, 9) are axially adjusted.

3. Double support bearing according to claims 1 and 2, characterised in that the component (9) adjustable by means of the spindle (10) is pan-shaped in vertical section and forms an upwardly oriented edge, which forms the male mould.

4. Double support bearing according to claims 1 to 3, characterised in that the spindle (10) is connected to a lever (11) which projects laterally out of the housing and is movable in a slot in the housing.

Fig. 1